# EUROPÄISCHE PATENTSCHRIFT

(11) **EP 1 436 351 B1**
(45) Veröffentlichungstag und Bekanntmachung des Hinweises auf die Patenterteilung: **22.06.2005**
(21) Anmeldenummer: 02781209.8
(22) Anmeldetag: 02.10.2002
(51) Int. Cl.: C08L 83/04, C08K 5/57, C08K 5/58

(54) **VERNETZBARE MASSEN AUF DER BASIS VON ORGANOSILICIUMVERBINDUNGEN**
CROSS-LINKABLE MATERIALS BASED ON ORGANOSILICON COMPOUNDS
MATIERES RETICULABLES A BASE DE COMPOSES ORGANOSILICIES

(30) Priorität: 18.10.2001 DE 10151477
(43) Veröffentlichungstag der Anmeldung: 14.07.2004
(73) Patentinhaber: Wacker-Chemie GmbH, 81737 München (DE)
(72) Erfinder: ZICHE, Wolfgang, 01665 Diera (DE)
(74) Vertreter: Budczinski, Angelika
(86) Internationale Anmeldenummer: PCT/EP2002/011097
(87) Internationale Veröffentlichungsnummer: WO 2003/035761

(56) Entgegenhaltungen:
- EP-A- 0 528 508
- GB-A- 1 348 402
- US-A- 3 525 778
- US-A- 6 162 756

## Beschreibung

Die Erfindung betrifft insbesondere bei Raumtemperatur vernetzbare Massen auf der Basis von Organosiliciumverbindungen, z.B. sogenannte RTV-1-Massen, sowie spezielle Zinnverbindungen, welche in diesen Massen als Katalysator eingesetzt werden können.

Die Verwendung von Dialkylzinn(IV)-Verbindungen als Kondensationskatalysatoren in RTV-1- urd RTV-2-Siliconkautschuken ist allgemein bekannt. In RTV-1-Alkoxymassen haben diese Zinnverbindungen allerdings den Nachteil, dass Sie die unerwünschte Spaltung der Siloxanketten durch Alkoholreste ("Äquilibrierung") ebenfalls katalysieren, wobei nicht mehr vernetzungsfähige Alkoxyendgruppen der Polysiloxankette entstehen und damit eine ausreichende Vernetzung der Masse nicht mehr möglich ist; d.h. dass bei der bestimmungsgemäßen Verwendung kein oder kein ausreichend stabiles Vulkanisat erhalten wird. Die Lagerstabilität, angegeben als Zeitdauer, welche die RTV-1-Masse gelagert werden kann, ohne ihre Eigenschaften merklich zu verlieren, wird durch die Äquilibrierung drastisch verringert.

Die Methoden der Wahl zur Verlängerung der Lagerstabilität bestehen bisher in
- Ersatz des Zinnkatalysators durch einen Titankatalysator. Der Nachteil hier besteht in der Gelbfärbung der Massen, wodurch nur gedeckte, aber keine transluzenten Massen möglich sind.
- Verringerung der Menge des Zinnkatalysators.
- Verwendung von weniger aggressiven Zinnkatalysatoren, etwa Zinn-Chelatkatalysatoren. Ein Überschuss an Chelatverbindung wie z.B. Acetylacetonat ist notwendig; Diese ist jedoch flüchtig, toxikologisch bedenklich und gesundheitsgefährdend.
- Zusatz von Alkoholfängern, sog. Scavengern, die sich auf Grund ihrer hohen Reaktivität mit Alkoholen umsetzen. Dieser Zusatz ist allerdings kostenaufwendig und verschlechtert im allgemeinen das Haftungsverhalten.
- Verwendung von Katalysatoren mit Sn-O-P-Bindungen, wie etwa in EP-A 850 254 beschrieben, die durch Umsetzung von Phosphorsäuremonoestern mit organischen Zinnverbindungen erhalten werden. Es hat sich jedoch gezeigt, dass häufig durch die sehr hohe Säurezahl der eingesetzten Phosphorverbindungen, die mindestens in equimolaren Mengen zur Zinnverbindung oder im Überschuss eingesetzt werden müssen, Haftungsprobleme verursacht werden, die insbesondere bei Wasserbelastung der Verklebungen zu Tage treten. Darüber hinaus sind Verbindungen mit Sn-O-P-Bindungen, erhalten aus Phosphorsäurediestern, bekannt aus US-A 3,525,778 und US-A 3,655,705.

Bekannt sind mit Sulfonsäure blockierte Dialkyldiacylzinnkatalysatoren für Polyurethane, wobei die Aktivierung über Amine erfolgt. Hierzu sei beispielsweise auf US-A 5 849 864 bzw. WO99/11369, Ashland Chemical Company verwiesen. RTV-2-Härter auf Organozinnbasis (Katalysator-Vernetzer-Kompositionen) sind in DE-A 195 27 101 beschrieben, die auch organische Säuren als Reaktionszeitregler enthalten können, wobei die Reaktionszeitregler die Reaktivität der beanspruchten Katalysator-Vernetzer-Kompositionen verbessern sollen.

Die Anwendung von Sn-O-SO₂R-haltigen Verbindungen, die beispielsweise aus Alkylzinnoxiden und Sulfonsäuren hergestellt werden können, in u.a. kondensationsvernetzenden Polymersystemen ist beschrieben. Hierzu sei z.B. auf US-A 3,095,434 und US-A 5,981,685 verwiesen. In den Beispielen nicht beschrieben wird die Verwendung der beanspruchten Katalysatoren mit Sn-Sulfonat-Einheiten für RTV-Silikonsysteme. Nicht beschrieben werden speziell Alkoxy-RTV-1-Systeme mit ihren spezifischen Problemen bezüglich der Lagerstabilität und der Notwendigkeit cokatalysierender Zusätze.

In EP-A 623 642 wird zur Stabilisierung von RTV-1-Acetoxymassen der Zusatz von Säuren, auch Sulfonsäuren, beschrieben, wenn die enthaltenen Polymere durch anionische Cyclenpolymerisation hergestellt worden sind und zur Neutralisation der basischen Polymerisationskatalysatoren z.B. Phosphorsäure verwendet wurde und die Massen somit z.B. Alkaliphosphate enthalten.

Der Einsatz von Reaktionsprodukten von Sulfonsäuren mit Aminen oder basischen Füllstoffen ist in gefüllten RTV-Systemen bekannt, um die Dispergierung der Füllstoffe zu erleichtern und um ein niedermoduliges Elastomer zu erhalten. Hierzu sei z.B. auf US-A 5,073,586 und US-A 5,118,738 verwiesen.

Gegenstand der Erfindung sind vernetzbare Massen auf der Basis von Organosiliciumverbindungen mit mindestens zwei hydrolysierbaren Gruppen, dadurch gekennzeichnet, dass als Katalysator mindestens eine Organozinnverbindung (C) enthalten ist, wobei die Organozinnverbindung (C) erhältlich ist durch Umsetzung von Phosphorverbindungen (i) mit C-P(=O)(OH)-Einheiten und Schwefelverbindungen (ii) mit -SO₃H-Gruppen und Zinnverbindungen (iii) enthaltend Einheiten der Formel

Rₐ(XR')_{b}SnX_{(4-a-b)/2} (III),

worin
R gleich oder verschieden sein kann und einwertige, gegebenenfalls substituierte Kohlenwasserstoffreste, die durch Sauerstoffatome unterbrochen sein können, bedeutet,
X gleich oder verschieden sein kann und -O- oder -S- bedeutet,
R' gleich oder verschieden sein kann und Wasserstoffatom oder einwertige, gegebenenfalls substituierte Kohlenwasserstoffreste, die durch Sauerstoffatome unterbrochen sein können, oder gegebenenfalls substituierte Silylreste bedeutet,
a 0, 1, 2 oder 3 ist und
b 0, 1, 2 oder 3 ist,
mit der Maßgabe, dass die Summe a+b kleiner oder gleich 4 ist.

Bevorzugt handelt es sich bei Rest R um Kohlenwasserstoffreste mit 1 bis 18 Kohlenstoffatomen, besonders bevorzugt um Alkylreste mit 1 bis 12 Kohlenstoffatomen, insbesondere um den n-Butyl- und den n-Octylrest.

Beispiele für Reste R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylrest und Methylcyclohexylreste; Alkenylreste, wie der Vinyl-, 1-Propenyl- und der 2-Propenylrest; Arylreste, wie der Phenyl-, Naphthyl-, Anthryl- und Phenanthrylrest; Alkarylreste, wie o-, m-, p-Tolylreste; Xylylreste und Ethylphenylreste; und Aralkylreste, wie der Benzylrest, der α- und der β-Phenylethylrest.

Beispiele für substituierte Reste R sind Methoxyethyl-, Ethoxyethyl- und der Ethoxyethoxyethylrest.

Bevorzugt handelt es sich bei X um Sauerstoffatom.

Bevorzugt handelt es sich bei Rest R' um Wasserstoffatom sowie gegebenenfalls mit Alkoxyresten und/oder Aminoresten substituierte Kohlenwasserstoffreste mit 1 bis 18 Kohlenstoffatomen, besonders bevorzugt um Alkyl- und Arylreste mit 1 bis 18 Kohlenstoffatomen, insbesondere um den Methyl- und Ethylrest.

Beispiele für Reste R' sind die für R genannten Beispiele sowie den Methoxyethyl-, Ethoxyethyl-, Methoxyethoxyethyl-, Aminoethoxyethyl- und Aminopropylrest.

Beispiele für Zinnverbindungen (iii), die zur Herstellung der erfindungsgemäß eingesetzten Zinnverbindungen (C) eingesetzt werden können, sind Tetra-n-butyldimethoxystannoxan, Tetra-n-butyldiethoxystannoxan, Di-n-butylzinnoxid, Tetra-n-butyldihydroxystannoxan, Di-n-butyldimethoxystannan, Tetra-n-octyldihydroxystannoxan, Di-n-octyldimethoxystannan, Octa-n-butyldiethoxytetrastannoxan, wobei Tetra-n-butyldimethoxystannoxan, Tetra-n-butyldiethoxystannoxan und Di-n-butyldimethoxystannan bevorzugt sowie Tetra-n-butyldimethoxystannoxan und Di-n-butyldimethoxystannan besonders bevorzugt sind.

Bei den Phosphorverbindungen (i), die zur Herstellung der erfindungsgemäß eingesetzten Zinnverbindungen (C) eingesetzt werden können, handelt es sich bevorzugt um solche der Formel

O=PR¹ ₘYₙ(OH)₃₋ₘ₋ₙ (I),

wobei
R¹ gleich oder verschieden sein kann und gegebenenfalls substituierte Kohlenwasserstoffreste mit 1 bis 30 Kohlenstoffatomen, die mit Sauerstoffatomen unterbrochen sein können, bedeutet,
Y gleich -OR², -NR²₂ oder Wasserstoffatom ist, worin R² gleich oder verschieden sein kann und eine für R¹ genannte Bedeutung hat, oder ein gegebenenfalls substituierter Silylrest sein kann,
n gleich 0 oder 1 ist und
m gleich 1 oder 2 ist, mit der Maßgabe, daß die Summe m+n 1 oder 2 ist,

Beispiele für Reste R¹ und R² sind unabhängig voneinander die für Rest R angegebenen Beispiele.

Beispiele für substituierte Reste R¹ und R² sind unabhängig voneinander Hydroxyalkyl-, Halogenalkyl- und Cyanoalkylreste sowie Reste der Struktur -(CH₂CH₂O)_{z}R'' mit R'' gleich Methyl-, Ethyl- oder Butylrest und z gleich eine ganze Zahl von 1 bis 18.

Bevorzugt handelt es sich bei Rest R¹ um Aryl-, Alkaryl- und Alkylreste, besonders bevorzugt um Aryl- und Alkylreste, insbesondere um Octyl-, Benzyl- oder Phenylreste.

Bevorzugt handelt es sich bei Rest R² um Aryl- und Alkylreste, besonders bevorzugt um Alkylreste, insbesondere um Methyl-, Ethyl- oder Butylreste.

Bevorzugt handelt es sich bei Rest Y um Alkoxy- und Aryloxyreste, besonders bevorzugt um Alkoxyreste, insbesondere um Methoxy-, Ethoxy- und Butoxyrest.

Bevorzugt hat m den Wert 1.

Bevorzugt hat n den Wert 0.

Beispiele für Phosphorverbindungen (i) sind Phenylphosphonsäure, Benzolphosphonigsäure, p-Aminophenylphosphonsäure, n-Octylphosphonsäure und 2-Amino-8-phosphonooctansäure, wobei Phenylphosphonsäure und n-Octylphosphonsäure bevorzugt sind.

Bei den Schwefelverbindungen (ii), die zur Herstellung der erfindungsgemäß eingesetzten Zinnverbindungen (C) eingesetzt werden können, handelt es sich bevorzugt um solche der Formel

R³-S(=O)₂OH (II),

wobei
R³ gleich oder verschieden sein kann und über Stickstoff gebundene Aminreste oder einwertige, gegebenenfalls substituierte Kohlenwasserstoffreste, die durch -S(=O)₂- unterbrochen sein können, bedeutet.

Bevorzugt handelt es sich bei Rest R³ um gegebenenfalls mit -SO₃H substituierte Kohlenwasserstoffreste mit 1 bis 40 Kohlenstoffatomen, die mit -S(=O)₂- unterbrochen sein können, besonders bevorzugt um Alkyl- und Arylreste mit 1 bis 40 Kohlenstoffatomen, insbesondere um alkylsubstituierte Arylreste mit 7 bis 40 Kohlenstoffatomen.

Beispiele für Reste R³ sind die für R genannten Beispiele sowie -NH₂, -C₆H₄-SO₃H und -C₄H₈-SO₃H.

Beispiele für Schwefelverbindungen (ii) sind Dodecylbenzolsulfonsäure, p-Toluolsulfonsäure, Benzolsulfonsäure und 1,3-Benzoldisulfonsäure, wobei Dodecylbenzolsulfonsäure und p-Toluolsulfonsäure bevorzugt und Dodecylbenzolsulfonsäure besonders bevorzugt sind.

Die Verbindungen (i), (ii) und (iii) sind jeweils handelsübliche Produkte bzw. können nach in der organischen Chemie bekannten Verfahren hergestellt werden.

Bei den erfindungsgemäß eingesetzten Organozinnverbindungen (C) kann es sich sowohl um Stannane handeln, als auch um oligomere oder polymere Zinnverbindungen, wie z.B. Stannoxane.

Bevorzugt handelt es sich bei den erfindungsgemäß eingesetzten Katalysatoren (C) um Stannane oder um lineare Stannoxane.

Beispiele für erfindungsgemäß eingesetzten Katalysatoren (C) sind Oct₂Sn(OP(=O)Ph(OH))(OSO₂-C₆H₄-CH₃), Oct₂Sn(O-P (=O)Oct (OEt))-O-SnOct₂(OSO₂-C₆H₄-C₁₂H₂₃), Bu₂Sn(O-P(=O)Oct(OH))-O-SnBu₂(OSO₂-C₆H₄-C₁₂H₂₃), Bu₂Sn[O-P(=O)Oct(O-Bu₂Sn(OEt))]-O-SnBu₂(OSO₂-C₆H₄-C₁₂H₂₃), Oct₂Sn(O-P(=O)Oct (OH))-O-SnOct₂(OSO₂-C₆H₄-C₁₂H₂₃), Oct₂Sn(O-P(=O)Oct (OEt))-(O-SnOct₂)₉(OSO₂-C₆H₄-C₁₂H₂₃) wobei Oct₂Sn(O-P(=O)Oct(OEt))-O-SnOct₂(OSO₂-C₆H₄-C₁₂H₂₃), Bu₂Sn[O-P (=O)Oct(O-Bu₂Sn(OEt)]-O-SnBu₂(OSO₂-C₆H₄-C₁₂H₂₃), Bu₂Sn(O-P (=O)Oct(OH))-O-SnBu₂(OSO₂-C₆H₄-C₁₂H₂₃) und Oct₂Sn(O-P (=O)Oct(OH))-O-SnOct₂(OSO₂-C₆H₄-C₁₂H₂₃) bevorzugt und Oct₂Sn(O-P (=O)Oct(OH))-O-SnOct₂(OSO₂-C₆H₄-C₁₂H₂₃)und Bu₂Sn(O-P(=O)Oct(OH))-O-SnBu₂(OSO₂-C₆H₄-C₁₂H₂₃) besonders bevorzugt sind mit Et gleich Ethylrest, Bu gleich n-Butylrest und Oct gleich n-Octylrest.

Ein weiterer Gegenstand der vorliegenden Erfindung sind Organozinnverbindungen erhältlich durch Umsetzung von Phosphorverbindungen (i) mit C-P(=O)(OH)-Einheiten und Schwefelverbindungen (ii) mit -SO₃H-Gruppen und Zinnverbindungen (iii) enthaltend Einheiten der Formel

Rₐ(XR')_{b}SnX_{(4-a-b)/2} (III),

worin R, X, R', a und b eine der oben angegebenen Bedeutungen haben, mit der Maßgabe, dass die Summe a+b kleiner oder gleich 4 ist.

Die erfindungsgemäßen bzw. erfindungsgemäß eingesetzten Organozinnverbindungen (C) können nach in der organischen Chemie bekannten Verfahrensweisen hergestellt werden, wie etwa durch Umsetzung der entsprechenden Organozinnverbindungen mit Gemischen aus Sulfonsäuren oder Sulfonsäurederivaten und Phosphonsäuren oder Phosphonsäurederivaten. Hierzu sei beispielsweise auf A.G. Davies *Organotin Chemistry,* VCH Verlagsgesellschaft, Weinheim, 1997, Kapitel 11.3 (Umsetzungen mit P-haltigen Säuren) und 11.4 (Umsetzungen mit P-haltigen Säuren) verwiesen.

Bevorzugt wird die erfindungsgemäße bzw. erfindungsgemäß eingesetzte Organozinnverbindung (C) dadurch hergestellt, daß die Verbindungen (i), (ii) und (iii) bei einer Temperatur im Bereich von 0 bis 150°C, besonders bevorzugt 20 bis 60°C, und dem Druck der umgebenden Atmosphäre, also etwa 900 bis 1100 hPa, umgesetzt werden.

Bei der erfindungsgemäßen Umsetzung der Verbindungen (i), (ii) und (iii) wird Phosphorverbindung (i) in Mengen von bevorzugt 0,1 bis 2,0 mol, besonders bevorzugt 0,2 bis 1,0 mol, jeweils bezogen auf 1 mol Zinnatome der Zinnverbindung (iii), eingesetzt.

Bei der erfindungsgemäßen Umsetzung der Verbindungen (i), (ii) und (iii) wird Sulfonsäure (ii) in Mengen von bevorzugt 0,05 bis 1,5 mol, besonders bevorzugt 0,1 bis 0,5 mol, jeweils bezogen auf 1 mol Zinnatome der Zinnverbindung (iii), eingesetzt.

Die Darstellung der erfindungsgemäß eingesetzten Katalysatoren (C) ist auch in situ durch direkte Zugabe der Edukte (i), (ii) und (iii) zu den übrigen Komponenten der vernetzbaren Massen möglich, was zum Offenbarungsgehalt der vorliegenden Erfindung zu zählen ist, jedoch nicht bevorzugt ist. Falls die erfindungsgemäßen Katalysatoren (C) in situ hergestellt werden sollen, ist es bevorzugt, dass basische Komponenten erst nach der in situ Reaktion der Zinnverbindung (iii), der Schwefelverbindung (ii) und der Phosphorverbindung (i) zugegeben werden.

Vorzugsweise enthalten die erfindungsgemäßen Massen auf der Basis von Organosiliciumverbindungen zusätzlich zu Organozinnverbindung (C) basischen Stickstoff aufweisende Verbindung (D).

Bei den basischen Stickstoff aufweisenden Verbindungen (D) kann es sich um Amine, stickstoffhaltige Heterocyclen oder aminofunktionelle Organosiliciumverbindungen handeln, wobei letztere bevorzugt sind.

Beispiele für aminofunktionelle Organosiliciumverbindungen (D) sind basischen Stickstoff aufweisende Silane, basischen Stickstoff aufweisende Organosiloxane, wie etwa solche der Formel (V), bei denen mindestens ein Rest R⁶ die Bedeutung von mit Aminogruppen substituiertem Kohlenwasserstoffrest hat.

Bei den basischen Stickstoff aufweisenden Organosiliciumverbindungen (D) handelt es sich bevorzugt um solche der Formel

(R⁹O)_{4-g}SiR¹⁰ _{g} (IV),

wobei
R⁹ gleich oder verschieden sein kann und eine der oben für R' angegebenen Bedeutungen hat,
R¹⁰ gleich oder verschieden sein kann und einwertige, basischen Stickstoff aufweisende, gegebenenfalls substituierte Kohlenwasserstoffreste bedeutet und
g 1, 2, 3 oder 4 ist,
sowie deren Teilhydrolysate.

Bei den Teilhydrolysaten kann es sich dabei um Teilhomohydrolysate handeln, d.h. Teilhydrolysate von einer Art von Organosiliciumverbindung der Formel (IV), wie auch um Teilcohydrolysate, d.h. Teilhydrolysate von mindestens zwei verschiedenen Arten von Organosiliciumverbindungen der Formel (IV).

Handelt es sich bei den in den erfindungsgemäßen Massen gegebenenfalls eingesetzten Verbindungen (D) um Teilhydrolysate von Organosiliciumverbindungen der Formel (IV), so sind solche mit bis zu 6 Siliciumatomen bevorzugt.

Beispiele für Rest R⁹ sind die oben für Rest R' genannten Beispiele. Bevorzugt handelt es sich bei Rest R⁹ um Wasserstoffatom und Alkylreste, besonders bevorzugt um Wasserstoffatom und Alkylreste mit 1 bis 4 Kohlenstoffatomen, insbesondere um Wasserstoffatom, den Methyl- und den Ethylrest.

Beispiele für Reste R¹⁰ sind Aminomethyl-, 1-Aminoethyl-, 3-Aminopropyl-, 3-(2-Aminoethyl)-aminopropyl-, Aminoethylaminoethylaminopropyl- und Cyclohexylaminopropylrest.

Bevorzugt handelt es sich bei Rest R¹⁰ um 3-Aminopropyl-, 3-(2-Aminoethyl)-aminopropyl-, Aminoethylaminoethylaminopropyl- und Cyclohexylaminopropylrest, wobei der 3-Aminopropyl- und 3-(2-Aminoethyl)-aminopropylrest besonders bevorzugt sind.

Beispiele für erfindungsgemäß gegebenenfalls eingesetzte, basischen Stickstoff aufweisende Verbindungen (D) sind 3-Aminopropyltrimethoxysilan, 3-Aminopropyltriethoxysilan, 3-(2-Aminoethylamino)propyltrimethoxysilan, 3-(2-Aminoethylamino)propyltriethoxysilan, 3-(N,N-Diethyl-2-aminoethylamino)propyltrimethoxysilan, 3-(N,N-Diethyl-2-aminoethylamino)propyltriethoxysilan, 3-(Cyclohexylamino)propyltrimethoxysilan, 3-(Cyclohexylamino)propyltriethoxysilan, Aminomethyltrimethoxysilan sowie Teilhydrolysate der genannten alkoxyfunktionellen Organosiliciumverbindungen.

Die erfindungsgemäß gegebenenfalls eingesetzten Verbindungen (D) sind handelsübliche Produkte bzw. können nach in der organischen Chemie bekannten Verfahren hergestellt werden.

Die erfindungsgemäßen Massen können neben den erfindungsgemäß als Kondensationskatalysatoren eingesetzten Organozinnverbindungen (C) und gegebenenfalls eingesetzten basischen Stickstoff aufweisenden Verbindungen (D) alle Komponenten enthalten, die auch bisher zur Herstellung von bei Raumtemperatur vernetzbaren Organopolysiloxanmassen eingesetzt wurden. Bei den hydrolysierbaren Gruppen, welche die eingesetzten, an der Vernetzungsreaktion beteiligten Organosiliciumverbindungen aufweisen können, kann es sich um beliebige Gruppen handeln, wie Acetoxy-, Oximato- und Organyloxygruppen, insbesondere Alkoxyreste, wie Ethoxyreste, Alkoxyethoxyreste und Methoxyreste. Ferner kann es sich bei den Organosiliciumverbindungen sowohl um Siloxane (≡Si-O-Si≡ -Strukturen) als auch um Silcarbane (≡Si-R'''-Si≡ - Strukturen mit R''' gleich einem zweiwertigen, gegebenenfalls substituierten oder mit Heteroatomen unterbrochenen Kohlenwasserstoffrest) oder deren Copolymere handeln.

Bevorzugt handelt es sich bei den erfindungsgemäßen vernetzbaren Massen um solche, die
(A) Organopolysiloxane mit mindestens zwei hydrolysierbaren Resten, ausgewählt aus Acetoxy-, Oximato- und Organyloxygruppen, gegebenenfalls
(B) Vernetzer mit mindestens drei hydrolysierbaren Resten, ausgewählt aus Acetoxy-, Oximato- und Organyloxygruppen, und/oder deren Teilhydrolysate,
(C) Organozinnverbindung erhältlich durch Umsetzung von Phosphorverbindungen (i), Schwefelverbindungen (ii) und Zinnverbindungen (iii) und gegebenenfalls
(D) basischen Stickstoff aufweisende Verbindungen (D) enthalten.

Bei den erfindungsgemäß eingesetzten Organopolysiloxanen mit mindestens zwei hydrolysierbaren Gruppen (A) handelt es sich vorzugsweise um solche der allgemeinen Formel

(R⁵O)_{3-d}R⁶ _{d}SiO-[R⁶ ₂SiO]ₑ-SiR⁶ _{d}(OR⁵)_{3-d} (V),

wobei
d 0, 1 oder 2 ist,
R⁶ gleiche oder verschiedene SiC-gebundene Kohlenwasserstoffreste mit 1 bis 18 Kohlenstoffatomen, die gegebenenfalls mit Halogenatomen, Ethergruppen, Estergruppen, Epoxygruppen, Mercaptogruppen, Cyanogruppen, Aminogruppen oder (Poly)glykolresten substituiert sind, wobei letztere aus Oxyethylen- und/oder Oxypropyleneinheiten aufgebaut sind, bedeutet und
R⁵ gleich oder verschieden sein kann und eine für R' angegebene Bedeutung hat,
e eine ganze Zahl von 10 bis 10 000, bevorzugt 100 bis 3 000, besonders bevorzugt 400 bis 2 000, ist,
mit der Maßgabe, dass d nur bei R⁵ gleich Wasserstoffatom den Wert 2 haben kann.

Beispiele für Reste R⁶ sind die für Rest R oben angegebenen Beispiele.

Bevorzugt handelt es sich bei Rest R⁶ um Alkylreste, besonders bevorzugt um Alkylreste mit 1 bis 4 Kohlenstoffatomen, insbesondere um den Methylrest.

Beispiele für Reste R⁵ sind die für Rest R' oben angegebenen Beispiele.

Bevorzugt handelt es sich bei Rest R⁵ um Wasserstoffatom und Alkylreste, besonders bevorzugt um Wasserstoffatom und Alkylreste mit 1 bis 4 Kohlenstoffatomen, insbesondere um Wasserstoffatom, den Methyl- und den Ethylrest.

Der durchschnittliche Wert für die Zahl e in Formel (V) ist vorzugsweise so gewählt, dass das Organopolysiloxan der Formel (V) eine Viskosität von 1000 bis 2 500 000 mPa·s, besonders bevorzugt von 4000 bis 800 000 mPa·s, jeweils gemessen bei einer Temperatur von 25°C, besitzt.

Obwohl in Formel (V) nicht angegeben bzw. aus der Bezeichnung Diorganopolysiloxan nicht entnehmbar, können bis zu 10 Molprozent der Diorganosiloxaneinheiten durch andere Siloxaneinheiten, wie R⁶₃SiO_{1/2}-, R⁶SiO_{3/2}- und SiO_{4/2}-Einheiten, ersetzt sein, wobei R⁶ die vorstehend dafür angegebene Bedeutung hat.

Beispiele für die in den erfindungsgemäßen Massen eingesetzten Organopolysiloxane mit mindestens zwei Organyloxyresten an einer jeden Endgruppe (A) sind

(MeO)₂MeSiO[SiMe₂O]₂₀₀₋₂₀₀₀SiMe(OMe)₂,

(EtO)₂MeSiO[SiMe₂O]₂₀₀₋₂₀₀₀SiMe(OEt)₂,

(MeO)₂ViSiO[SiMe₂O]₂₀₀₋₂₀₀₀SiVi(OMe)₂ und

(EtO)₂ViSiO[SiMe₂O]₂₀₀₋₂₀₀₀SiVi(OEt)₂,

(MeO)₂(H₂N-CH₂CH₂CH₂)SiO[SiMe₂O]₂₀₀₋₂₀₀₀Si(CH₂CH₂CH₂-NH₂)(OMe)₂

wobei Me Methylrest, Et Ethylrest und Vi Vinylrest bedeutet.

Die in den erfindungsgemäßen Massen eingesetzten Organosiliciumverbindungen mit mindestens zwei hydrolysierbaren Gruppen (A) sind handelsübliche Produkte bzw. können nach in der Siliciumchemie bekannten Verfahren, beispielsweise durch Umsetzung von α,ω-Dihydroxypolyorganosiloxanen mit den entsprechenden Organyloxysilanen, hergestellt werden.

Bei den in den erfindungsgemäßen Massen gegebenenfalls eingesetzten Vernetzern (B) kann es sich um beliebige, bisher bekannte Vernetzer mit mindestens drei hydrolysierbaren Resten handeln, wie beispielsweise Silane oder Siloxane mit mindestens drei Organyloxygruppen.

Bei den in den erfindungsgemäßen Massen gegebenenfalls eingesetzten Vernetzern (B) handelt es sich vorzugsweise um Organosiliciumverbindungen der Formel

(R⁷O)_{4-f}SiR⁸ _{f} (VI),

wobei
R⁷ gleich oder verschieden sein kann und eine der oben für R' angegebenen Bedeutungen hat,
R⁸ eine oben für R genannte Bedeutung besitzt und
f 0 oder 1 ist,
sowie deren Teilhydrolysate.

Bei den Teilhydrolysaten kann es sich dabei um Teilhomohydrolysate handeln, d.h. Teilhydrolysate von einer Art von Organosiliciumverbindung der Formel (VI), wie auch um Teilcohydrolysate, d.h. Teilhydrolysate von mindestens zwei verschiedenen Arten von Organosiliciumverbindungen der Formel (VI).

Handelt es sich bei den in den erfindungsgemäßen Massen gegebenenfalls eingesetzten Vernetzern (B) um Teilhydrolysate von Organosiliciumverbindungen der Formel (VI), so sind solche mit bis zu 6 Siliciumatomen bevorzugt.

Beispiele für Rest R⁷ sind die oben für Rest R' genannten Beispiele. Bevorzugt handelt es sich bei Rest R⁷ um Wasserstoffatom und Alkylreste, besonders bevorzugt um Wasserstoffatom und Alkylreste mit 1 bis 4 Kohlenstoffatomen, insbesondere um Wasserstoffatom, den Methyl- und den Ethylrest.

Beispiele für Rest R⁸ sind die oben für Rest R genannten Beispiele, wobei Kohlenwasserstoffreste mit 1 bis 12 Kohlenstoffatomen bevorzugt und der Methyl- und der Vinylrest besonders bevorzugt sind.

Besonders bevorzugt handelt es sich bei den in den erfindungsgemäßen Massen gegebenenfalls eingesetzten Vernetzern (B) um Tetramethoxysilan, Tetraethoxysilan, Tetrapropoxysilan, Tetrabutoxysilan, Methyltrimethoxysilan, Methyltriethoxysilan, Vinyltrimethoxysilan, Vinyltriethoxysilan, Phenyltrimethoxysilan, Phenyltriethoxysilan, 3-Cyanopropyltrimethoxysilan, 3-Cyanopropyltriethoxysilan, 3-(Glycidoxy)propyltriethoxysilan, 1,2-Bis-(trimethoxysilyl)ethan, 1,2-Bis(triethoxysilyl)ethan sowie Teilhydrolysate der genannten alkoxyfunktionellen Organosiliciumverbindungen, wie z.B. Hexaethoxydisiloxan.

Die in den erfindungsgemäßen Massen gegebenenfalls eingesetzten Vernetzer (B) sind handelsübliche Produkte bzw. können nach in der Siliciumchemie bekannten Verfahren hergestellt werden.

Falls die erfindungsgemäßen Massen Vernetzer (B) enthalten, handelt es sich um Mengen von vorzugsweise 0,01 bis 20 Gewichtsteilen, besonders bevorzugt 0,5 bis 10 Gewichtsteilen, insbesondere 1,0 bis 5,0 Gewichtsteilen, jeweils bezogen auf 100 Gewichtsteile Organopolysiloxan (A). Auf die Zugabe von Vernetzer (B) kann u.a. verzichtet bzw. die Menge reduziert werden, wenn z.B. als Komponente (D) Verbindungen mit mindestens drei hydrolysierbaren Gruppen eingesetzt werden.

Die erfindungsgemäßen Massen enthalten Katalysator (C) in Mengen von bevorzugt 0,001 bis 5 Gewichtsprozent, besonders bevorzugt 0,05 bis 3 Gewichtsprozent, insbesondere 0,1 bis 1 Gewichtsprozent, jeweils bezogen auf 100 Gewichtsteile Organopolysiloxan (A).

Die erfindungsgemäßen Massen enthalten bevorzugt Komponente (D).

Falls die erfindungsgemäßen Massen Komponente (D) enthalten, so handelt es sich um Mengen von bevorzugt 0,001 bis 6 Gewichtsprozent, besonders bevorzugt 0,5 bis 4 Gewichtsprozent, insbesondere 1 bis 3 Gewichtsprozent, jeweils bezogen auf 100 Gewichtsteile Organopolysiloxan (A).

Zusätzlich zu den oben beschriebenen Komponenten (A), (B), (C) und gegebenenfalls (D) können die erfindungsgemäßen Massen nun weitere Stoffe, wie Weichmacher (E), Füllstoffe (F), Haftvermittler (G) und Additive (H) enthalten, wobei die zusätzlichen Stoffe (E) bis (H) die gleichen sein können, die auch bisher in unter Ausschluss von Feuchtigkeit lagerfähige und bei Zutritt von Feuchtigkeit vernetzbaren Massen eingesetzt worden sind.

Beispiele für Weichmacher (E) sind bei Raumtemperatur flüssige, durch Trimethylsiloxygruppen endblockierte Dimethylpolysiloxane, insbesondere mit Viskositäten im Bereich zwischen 50 und 1000 mPa·s, sowie hochsiedende Kohlenwasserstoffe, wie zum Beispiel Paraffinöle.

Die erfindungsgemäßen Massen enthalten Weichmacher (E) in Mengen von vorzugsweise 0 bis 300 Gewichtsteilen, besonders bevorzugt 10 bis 200 Gewichtsteilen, insbesondere 20 bis 100 Gewichtsteilen, jeweils bezogen auf 100 Gewichtsteile Organopolysiloxan (A).

Beispiele für Füllstoffe (F) sind nicht verstärkende Füllstoffe, also Füllstoffe mit einer BET-Oberfläche von bis zu 50 m²/g, wie Quarz, Diatomeenerde, Calciumsilikat, Zirkoniumsilikat, Zeolithe, Metalloxidpulver, wie Aluminium-, Titan-, Eisen- oder Zinkoxide bzw. deren Mischoxide, Bariumsulfat, Calciumcarbonat, Gips, Siliciumnitrid, Siliciumcarbid, Bornitrid, Glas- und Kunststoffpulver, wie Polyacrylnitrilpulver; verstärkende Füllstoffe, also Füllstoffe mit einer BET-Oberfläche von mehr als 50 m²/g, wie pyrogen hergestellte Kieselsäure, gefällte Kieselsäure, gefällte Kreide, Ruß, wie Furnace- und Acetylenruß und Silicium-Aluminium-Mischoxide großer BET-Oberfläche; faserförmige Füllstoffe, wie Asbest sowie Kunststoffasern. Die genannten Füllstoffe können hydrophobiert sein, beispielsweise durch die Behandlung mit Organosilanen bzw. -siloxanen oder mit Stearinsäure oder durch Veretherung von Hydroxylgruppen zu Alkoxygruppen. Falls Füllstoffe (E) eingesetzt werden, handelt es sich bevorzugt um hydrophile pyrogene Kieselsäure und stearinsäurebelegte Kreide.

Die erfindungsgemäßen Massen enthalten Füllstoffe (F) in Mengen von vorzugsweise 0 bis 300 Gewichtsteilen, besonders bevorzugt 1 bis 200 Gewichtsteilen, insbesondere 5 bis 200 Gewichtsteilen, jeweils bezogen auf 100 Gewichtsteile Organopolysiloxan (A).

Beispiele für die in den erfindungsgemäßen Massen eingesetzten Haftvermittler (G) sind Silane und Organopolysiloxane mit funktionellen Gruppen, wie beispielsweise solche mit Glycidoxypropyl- oder Methacryloxypropylresten sowie Tetraalkoxysilane. Falls jedoch bereits eine andere Komponente, wie etwa Siloxan (A) oder Vernetzer (B), die genannten funktionellen Gruppen aufweist, kann auf einen Zusatz von Haftvermittler verzichtet werden.

Die erfindungsgemäßen Massen enthalten Haftvermittler (G) in Mengen von vorzugsweise 0 bis 50 Gewichtsteilen, besonders bevorzugt 1 bis 20 Gewichtsteilen, insbesondere 1 bis 10 Gewichtsteilen, jeweils bezogen auf 100 Gewichtsteile Organopolysiloxan (A).

Beispiele für Additive (H) sind Pigmente, Farbstoffe, Riechstoffe, Fungicide, Oxidationsinhibitoren, Mittel zur Beeinflussung der elektrischen Eigenschaften, wie leitfähiger Ruß, flammabweisend machende Mittel, Lichtschutzmittel und Mittel zur Verlängerung der Hautbildungszeit, wie Silane mit einem SiC-gebundenen Mercaptoalkylrest, zellenerzeugende Mittel, z.B. Azodicarbonamid, Hitzestabilisatoren und Thixotropiermittel, wie beispielsweise Phosphorsäureester, und organischen Lösungsmittel, wie Alkylaromaten.

Die erfindungsgemäßen Massen enthalten Additive (H) in Mengen von vorzugsweise 0 bis 100 Gewichtsteilen, besonders bevorzugt 0 bis 30 Gewichtsteilen, insbesondere 0 bis 10 Gewichtsteilen, jeweils bezogen auf 100 Gewichtsteile Organopolysiloxan (A).

Besonders bevorzugt handelt es sich bei den erfindungsgemäßen Massen um solche, die
(A) Diorganopolysiloxan der Formel (V), gegebenenfalls
(B) Vernetzer der Formel (VI) und/oder deren Teilhydrolysate,
(C) Organozinnverbindung und
(D) basischen Stickstoff aufweisende Verbindung der Formel (IV)
enthalten.

Insbesondere handelt es sich bei den erfindungsgemäßen Massen um solche, die aus
(A) 100 Gewichtsteilen Polydiorganosiloxan der Formel (V),
(B) 0,01 bis 20 Gewichtsteilen Vernetzer der Formel (VI) und/oder deren Teilhydrolysate,
(C) 0,05 bis 3 Gewichtsteilen Organozinnverbindung,
(D) 0,01 bis 4 Gewichtsteilen basischen Stickstoff aufweisende Verbindung der Formel (IV),
(E) 0 bis 300 Gewichtsteilen Weichmacher,
(F) 0 bis 300 Gewichtsteilen Füllstoffe,
(G) 0 bis 50 Gewichtsteilen Haftvermittler und
(H) 0 bis 100 Gewichtsteilen Additive
bestehen.

Bei den einzelnen Komponenten der erfindungsgemäßen Massen kann es sich jeweils um eine Art einer solchen Komponente wie auch um ein Gemisch aus mindestens zwei verschiedenen Arten derartiger Komponenten handeln.

Zur Bereitung der erfindungsgemäßen Massen können alle Bestandteile der jeweiligen Masse in beliebiger Reihenfolge miteinander vermischt werden. Dieses Vermischen kann bei Raumtemperatur und dem Druck der umgebenden Atmosphäre, also etwa 900 bis 1100 hPa, erfolgen. Falls erwünscht, kann dieses Vermischen aber auch bei höheren Temperaturen erfolgen, z.B. bei Temperaturen im Bereich von 35°C bis 135°C.

Die Herstellung der erfindungsgemäßen Massen und deren Lagerung muß unter im wesentlichen wasserfreien Bedingungen erfolgen, da ansorsten die Massen vorzeitig aushärten können.

Für die Vernetzung der erfindungsgemäßen Massen zu Elastomeren reicht der übliche Wassergehalt der Luft aus. Die Vernetzung kann, falls erwünscht, auch bei höheren oder niedrigeren Temperaturen als Raumtemperatur, z.B. bei -5° bis 15°C oder bei 30° bis 50°C durchgeführt werden. Vorzugsweise wird die Vernetzung bei einem Druck von 100 bis 1100 hPa, insbesondere beim Druck der umgebenden Atmosphäre, durchgeführt.

Ein weiterer Gegenstand der vorliegenden Erfindung sind Formkörper, hergestellt durch Vernetzung der erfindungsgemäßen Massen.

Die erfindungsgemäßen vernetzbaren Massen haben den Vorteil, dass sie sich durch eine sehr hohe Lagerstabilität und eine hohe Vernetzungsgeschwindigkeit auszeichnen.

Dabei war es überraschend, daß durch die Kombination der schwefelhaltigen Gruppen und der phosphorhaltigen Gruppen vernetzbare Massen mit erheblich verbesserter Lagerstabilität und deutlich erhöhten Vernetzungsgeschwindigkeit erhalten werden.

Des weiteren haben die erfindungsgemäßen Massen den Vorteil, dass durch den Einsatz der Organozinnverbindungen (C) farblose, transluzente Massen erhalten werden.

Die erfindungsgemäßen Massen können für alle Verwendungszwecke eingesetzt werden, für die unter Ausschluß von Wasser lagerfähige, bei Zutritt von Wasser bei Raumtemperatur zu Elastomeren vernetzende Massen eingesetzt werden können.

Die erfindungsgemäßen Massen eignen sich somit ausgezeichnet beispielsweise als Abdichtmassen für Fugen, einschließlich senkrecht verlaufender Fugen, und ähnlichen Leerräumen von z.B. 10 bis 40 mm lichter Weite, z.B. von Gebäuden, Land-, Wasser- und Luftfahrzeugen, oder als Klebstoffe oder Verkittungsmassen, z.B. im Fensterbau oder bei der Herstellung von Aquarien oder Vitrinen, sowie z.B. zur Herstellung von Schutzüberzügen, einschließlich solcher für der ständigen Einwirkung von Süß- oder Meerwasser ausgesetzte Oberflächen, oder das Gleiten verhindernden Überzügen, oder von gummielastischen Formkörpern sowie für die Isolierung von elektrischen oder elektronischen Vorrichtungen.

In den nachstehend beschriebenen Beispielen beziehen sich alle Viskositätsangaben auf eine Temperatur von 25°C. Sofern nicht anders angegeben, werden die nachstehenden Beispiele bei einem Druck der umgebenden Atmosphäre, also etwa bei 1000 hPa, und bei Raumtemperatur, also bei etwa 23°C, bzw. bei einer Temperatur, die sich beim Zusammengeben der Reaktanden bei Raumtemperatur ohne zusätzliche Heizung oder Kühlung einstellt, sowie bei einer relativen Luftfeuchtigkeit von etwa 50 % durchgeführt. Des weiteren beziehen sich alle Angaben von Teilen und Prozentsätzen, soweit nichts anderes angegeben ist, auf das Gewicht.

Die Lagerstabilität der in den folgenden Beispielen hergestellten RTV-1-Alkoxymassen (= Compounds) wird anhand der Hautbildungszeit der Compounds, ihrer Vulkanisation zu elastischen Kautschuken und deren Shore-A-Härte als Funktion der Lagerzeit ermittelt. Die Alterung der Compounds wird durch die Lagerung bei 100°C beschleunigt.

### Beispiel 1

### Herstellung von Zinnkatalysator 1

40 g einer Zinnverbindung, welche durch Umsetzung von 4 Teilen Tetraethoxysilan mit 2,2 Teilen Dibutylzinndiacetat hergestellt wurde, werden mit 16 g Dodecylbenzolsulfonsäure und 6 g Benzolphosphonsäure versetzt, wobei das entstehende Methanol im Vakuum entfernt wird. Es wird eine viskose, klare Verbindung erhalten.

In einem Planetenmischer mit Vakuumausrüstung werden unter Wasserausschluss 55,4 Gew.-Teile eines Polydimethylsiloxans mit -OSi(OCH₃)₂(CH₃)-Endgruppen, das eine Viskosität von 80000 mPas besitzt, mit 31,2 Gew.-Teilen eines Polydimethylsiloxans mit -OSi(CH₃)₃-Endgruppen und einer Viskosität von 100 mPas sowie 4,0 Gew.-Teilen Methyltrimethoxysilan und 1,5 Gew.-Teilen 3-Aminopropyltrimethoxysilan vermischt. Dann werden 8,0 Gew.-Teile pyrogene Kieselsäure mit einer BET-Oberfläche von 150 m²/g (käuflich erhältlich bei Wacker-Chemie GmbH unter dem Handelsnamen "WACKER HDK® V15") eingemischt und zum Schluss 0,15 Gew.-Teile des oben beschriebenen Zinnkatalysators 1 zugegeben. Nach Homogenisieren im Vakuum wird der so erhaltene Compound in feuchtigkeitsdichte Gebinde abgefüllt und nach der in Tabelle 1 angegebenen Lagerzeit vernetzen gelassen. Dazu wird der so erhaltene Compound in einer 2 mm dicken Schicht auf eine PE-Folie aufgebracht und bei 23°C und 50% relativer Luftfeuchtigkeit stehen gelassen. Die Vulkanisation wird als gut beurteilt, wenn nach 24 Stunden die Masse durchvulkanisiert ist.

Zudem wird die Hautbildungszeit bestimmt und die Shore-A-Härte eines 6 mm dicken Elastomerblocks gemessen, der 7 Tage bei 23°C und 50% relativer Luftfeuchtigkeit vulkanisiert wurde.

Die Ergebnisse über das Lager- und Vulkanisationsverhalten finden sich in Tabelle 1.

### Beispiel 2

### Herstellung von Zinnkatalysator 2

Di-n-butylzinnoxid wird in Toluol mit 1 Moläquivalent p-Dodecylbenzolsulfonsäure-Monohydrat und 1 Moläquivalent Benzolphosphonsäure zum Rückfluss erhitzt und das Reaktionswasser azeotrop entfernt. Der Rückstand wird in wenig Methyltrimethoxysilan gelöst, und es wird eine hochviskose Flüssigkeit erhalten.

Die in Beispiel 1 beschriebene Arbeitsweise wird wiederholt mit der Abänderung, dass anstelle von 0,15 Gew.-Teilen Zinnkatalysator 1 0,15 Gew.-Teile Zinnkatalysator 2 eingesetzt werden.

Die Ergebnisse über das Lager- und Vulkanisationsverhalten finden sich in Tabelle 1.

### Vergleichsbeispiel 1

### Herstellung von Vergleichskatalysator A

40 g einer Zinnverbindung, welche durch Umsetzung von 4 Teilen Tetraethoxysilan mit 2,2 Teilen Dibutylzinndiacetat hergestellt wurde, werden mit 16 g Dodecylbenzolsulfonsäure versetzt, wobei das entstehende Methanol im Vakuum entfernt wird. Es wird eine viskose, klare Verbindung erhalten.

Die in Beispiel 1 beschriebene Arbeitsweise wird wiederholt mit der Abänderung, dass anstelle von 0,15 Gew.-Teilen Zinnkatalysator 1 0,2 Gew.-Teile Vergleichskatalysator A eingesetzt werden.

Die Ergebnisse über das Lager- und Vulkanisationsverhalten finden sich in Tabelle 1.

### Vergleichsbeispiel 2

### Herstellung von Vergleichskatalysator B

40 g Tetra-n-octyldimethoxydistannoxan werden mit 8 g Benzolphosphonsäure versetzt, wobei das entstehende Methanol im Vakuum entfernt wird. Der Rückstand wird in wenig Methyltrimethoxysilan gelöst, und es wird eine viskose, klare Verbindung erhalten.

Die in Beispiel 1 beschriebene Arbeitsweise wird wiederholt mit der Abänderung, dass anstelle von 0,15 Gew.-Teilen Zinnkatalysator 1 0,2 Gew.-Teile Vergleichskatalysator B eingesetzt werden.

Die Ergebnisse über das Lager- und Vulkanisationsverhalten finden sich in Tabelle 1.

### Beispiel 3

In einem Planetenmischer mit Vakuumausrüstung werden unter Wasserausschluss 55,4 Gew.-Teile eines Polydimethylsiloxans mit -OSi(OCH₃)₂(CH₃)-Endgruppen, das eine Viskosität von 80000 mPas besitzt, mit 31,2 Gew.-Teilen eines Polydimethylsiloxans mit -OSi(CH₃)₃-Endgruppen und einer Viskosität von 100 mPas sowie 4,0 Gew.-Teilen Methyltrimethoxysilan und 0,2 Gew.-Teilen einer Zinnverbindung, welche durch Umsetzung von 4 Teilen Tetraethoxysilan mit 2,2 Teilen Dibutylzinndiacetat hergestellt wurde, und 0,05 Gew.-Teilen Benzolphosphonsäure (gelöst in Methyltrimethoxysilan), 0,1 Gew.-Teilen Dodecylbenzolsulfonsäure vermischt und 10 Minuten gerührt. Dann werden 8,0 Gew.-Teile pyrogene Kieselsäure mit einer BET-Oberfläche von 150 m²/g (käuflich erhältlich bei Wacker-Chemie GmbH unter dem Handelsnamen "WACKER HDK® V15") eingemischt und zum Schluss 1,5 Gew.-Teile 3-Aminopropyltrimethoxysilan zugegeben. Nach Homogenisieren im Vakuum wird der so erhaltene Compound in feuchtigkeitsdichte Gebinde abgefüllt und nach der in Tabelle 1 angegebenen Lagerzeit, wie in Beispiel 1 beschrieben, vernetzen gelassen.

Die Ergebnisse über das Lager- und Vulkanisationsverhalten finden sich in Tabelle 1.

### Vergleichsbeispiel 3

In einem Planetenmischer mit Vakuumausrüstung werden unter Wasserausschluss 55,4 Gew.-Teile eines Polydimethylsiloxans mit -OSi(OCH₃)₂(CH₃)-Endgruppen, das eine Viskosität von 80000 mPas besitzt, mit 31,2 Gew.-Teilen eines Polydimethylsiloxans mit -OSi(CH₃)₃-Endgruppen und einer Viskosität von 100 mPas sowie 4,0 Gew.-Teilen Methyltrimethoxysilan und 0,2 Gew.-Teilen einer Zinnverbindung, welche durch Umsetzung von 4 Teilen Tetraethoxysilan mit 2,2 Teilen Dibutylzinndiacetat hergestellt wurde, und 0,3 Gew.-Teilen Benzolphosphonsäure (gesättigte Lösung in Methyltrimethoxysilan) vermischt und 10 Minuten gerührt. Dann werden 8,0 Gew.-Teile pyrogene Kieselsäure mit einer BET-Oberfläche von 150 m²/g (käuflich erhältlich bei Wacker-Chemie GmbH unter dem Handelsnamen "WACKER HDK® V15") eingemischt und zum Schluss 1,5 Gew.-Teile 3-Aminopropyltrimethoxysilan zugegeben. Nach Homogenisieren im Vakuum wird der so erhaltene Compound in feuchtigkeitsdichte Gebinde abgefüllt und nach der in Tabelle 1 angegebenen Lagerzeit wie in Beispiel 1 beschrieben vernetzen gelassen.

Die Ergebnisse über das Lager- und Vulkanisationsverhalten finden sich in Tabelle 1.

**Tabelle 1:**

| | Vulkanisation gut nach x Tagen100 °C-Lagerung | Hautbildungszeit/ Shore A Härte nach 0d/100°C | Hautbildungszeit/ Shore A Härte nach 1d/100°C | Hautbildungszeit/ Shore A Härte nach 2d/100°C | Hautbildungszeit/ Shore A Härte nach 3d/100°C |
|---|---|---|---|---|---|
| Beispiel 1 | 7 | 15/21 | 18/19 | 18/18 | 19/18 |
| Beispiel 2 | 6 | 17/21 | 24/19 | 18/17 | 20/17 |
| Vergleichsbeispiel 1 | 3 | 10/21 | 12/9 | 15/2 | keine Vulkanisation |
| Vergleichsbeispiel 2 | 3 | 15/15 | 18/15 | 28/12 | 30/8 |
| Beispiel 2 | 8 | 15/21 | 18/19 | 18/17 | 19/16 |
| Vergleichsbeispiel 3 | 2 | 25/16 | 23/10 | 80/4 | keine Vulkanisation |

## Patentansprüche

1. Vernetzbare Massen auf der Basis von Organosiliciumverbindungen mit mindestens zwei hydrolysierbaren Gruppen, **dadurch gekennzeichnet, dass** als Katalysator mindestens eine Organozinnverbindung (C) enthalten ist, wobei die Organozinnverbindung (C) erhältlich ist durch Umsetzung von Phosphorverbindungen (i) mit C-P(=O)(OH)-Einheiten und Schwefelverbindungen (ii) mit -SO₃H-Gruppen und Zinnverbindungen (iii) enthaltend Einheiten der Formel
Rₐ(XR')_{b}SnX_{(4-a-b)/2} (III),
worin
R gleich oder verschieden sein kann und einwertige, gegebenenfalls substituierte Kohlenwasserstoffreste, die durch Sauerstoffatome unterbrochen sein können, bedeutet,
X gleich oder verschieden sein kann und -O- oder -S- bedeutet, R' gleich oder verschieden sein kann und Wasserstoffatom oder einwertige, gegebenenfalls substituierte Kohlenwasserstoffreste, die durch Sauerstoffatome unterbrochen sein können, oder gegebenenfalls substituierte Silylreste bedeutet,
a 0, 1, 2 oder 3 ist und
b 0, 1, 2 oder 3 ist,
mit der Maßgabe, dass die Summe a+b kleiner oder gleich 4 ist.

2. Massen gemäß Anspruch 1, **dadurch gekennzeichnet, daß** sie basischen Stickstoff aufweisende Verbindung (D) enthalten.

3. Massen gemäß Anspruch 2, **dadurch gekennzeichnet, dass** es sich bei den basischen Stickstoff aufweisenden Verbindungen (D) um solche, ausgewählt aus der Gruppe bestehend aus Aminen, stickstoffhaltigen Heterocyclen oder aminofunktionellen Organosiliciumverbindungen, handelt.

4. Massen gemäß Anspruch 2 oder 3, **dadurch gekennzeichnet, dass** es sich bei den basischen Stickstoff aufweisenden Verbindungen (D) um aminofunktionelle Organosiliciumverbindungen handelt.

5. Massen gemäß einem oder mehreren der Ansprüche 2 bis 4, **dadurch gekennzeichnet, dass** es sich bei den basischen Stickstoff aufweisenden Verbindungen (D) um Organosiliciumverbindungen der Formel
(R⁹O)_{4-g}SiR¹⁰ _{g} (IV)
handelt, wobei
R⁹ gleich oder verschieden sein kann und eine der oben für R' angegebenen Bedeutungen hat,
R¹⁰ gleich oder verschieden sein kann und einwertige, basischen Stickstoff aufweisende, gegebenenfalls substituierte Kohlenwasserstoffreste bedeutet und
g 1, 2, 3 oder 4 ist,
sowie deren Teilhydrolysate.

6. Massen gemäß einem oder mehreren der Ansprüche 1 bis 5, **dadurch gekennzeichnet, dass** es sich bei den vernetzbaren Massen um solche handelt, die
(A) Organopolysiloxane mit mindestens zwei hydrolysierbaren Resten, ausgewählt aus Acetoxy-, Oximato- und Organyloxygruppen, gegebenenfalls
(B) Vernetzer mit mindestens drei hydrolysierbaren Resten, ausgewählt aus Acetoxy-, Oximato- und Organyloxygruppen, und/oder deren Teilhydrolysate,
(C) Organozinnverbindung erhältlich durch Umsetzung von Phosphorverbindungen (i), Schwefelverbindungen (ii) und Zinnverbindungen (iii), wie in Anspruch 1 definiert, und gegebenenfalls
(D) basischen Stickstoff aufweisende Verbindungen (D) enthalten.

7. Massen gemäß einem oder mehreren der Ansprüche 1 bis 6, **dadurch gekennzeichnet, dass** es sich bei den vernetzbaren Massen um solche handelt, die
(A) Diorganopolysiloxan der Formel
(R⁵O)_{3-d}R⁶ _{d}SiO-[R⁶ ₂SiO]ₑ-SiR⁶ _{d}(OR⁵)_{3-d} (V),
wobei
d 0, 1 oder 2 ist,
R⁶ gleiche oder verschiedene SiC-gebundene Kohlenwasserstoffreste mit 1 bis 18 Kohlenstoffatomen, die gegebenenfalls mit Halogenatomen, Ethergruppen, Estergruppen, Epoxygruppen, Mercaptogruppen, Cyanogruppen, Aminogruppen oder (Poly)glykolresten substituiert sind, wobei letztere aus Oxyethylen- und/oder Oxypropyleneinheiten aufgebaut sind, bedeutet und
R⁵ gleich oder verschieden sein kann und eine für R' angegebene Bedeutung hat,
e eine ganze Zahl von 10 bis 10 000 ist,
mit der Maßgabe, dass d nur bei R⁵ gleich Wasserstoffatom den Wert 2 haben kann, gegebenenfalls
(B) Vernetzer der Formel
(R⁷O)_{4-f}SiR⁸ _{f} (VI),
wobei
R⁷ gleich oder verschieden sein kann und eine der oben für R' angegebenen Bedeutungen hat,
R⁸ eine oben für R genannte Bedeutung besitzt und
f 0 oder 1 ist,
und/oder deren Teilhydrolysate,
(C) Organozinnverbindung und
(D) basischen Stickstoff aufweisende Verbindung der Formel (IV)
enthalten.

8. Massen gemäß einem oder mehreren der Ansprüche 1 bis 7, **dadurch gekennzeichnet, dass** es sich bei den vernetzbaren Massen um solche handelt; die aus
(A) 100 Gewichtsteilen Polydiorganosiloxan der Formel
(R⁵O)_{3-d}R⁶ _{d}SiO-[R⁶ ₂SiO]ₑ-SiR⁶ _{d}(OR⁵)_{3-d} (V),
wobei
d 0, 1 oder 2 ist,
R⁶ gleiche oder verschiedene SiC-gebundene Kohlenwasserstoffreste mit 1 bis 18 Kohlenstoffatomen, die gegebenenfalls mit Halogenatomen, Ethergruppen, Estergruppen, Epoxygruppen, Mercaptogruppen, Cyanogruppen, Aminogruppen oder (Poly)glykolresten substituiert sind, wobei letztere aus Oxyethylen- und/oder Oxypropyleneinheiten aufgebaut sind, bedeutet und
R⁵ gleich oder verschieden sein kann und eine für R' angegebene Bedeutung hat,
e eine ganze Zahl von 10 bis 10 000 ist,
mit der Maßgabe, dass d nur bei R⁵ gleich Wasserstoffatom den Wert 2 haben kann,
(B) 0,01 bis 20 Gewichtsteilen Vernetzer der Formel
(R⁷O)_{4-f}SiR⁸ _{f} (VI),
wobei
R⁷ gleich oder verschieden sein kann und eine der oben für R' angegebenen Bedeutungen hat,
R⁸ eine oben für R genannte Bedeutung besitzt und
f 0 oder 1 ist,
und/oder deren Teilhydrolysate,
(C) 0,05 bis 3 Gewichtsteilen Organozinnverbindung,
(D) 0,01 bis 4 Gewichtsteilen basischen Stickstoff aufweisende Verbindung der Formel (IV),
(E) 0 bis 300 Gewichtsteilen Weichmacher,
(F) 0 bis 300 Gewichtsteilen Füllstoffe,
(G) 0 bis 50 Gewichtsteilen Haftvermittler und
(H) 0 bis 100 Gewichtsteilen Additive
bestehen.

9. Organozinnverbindungen, erhältlich durch Umsetzung von Phosphorverbindungen (i) mit C-P(=O)(OH)-Einheiten und Schwefelverbindungen (ii) mit -SO₃H-Gruppen und Zinnverbindungen (iii), enthaltend Einheiten der Formel
Rₐ(XR')_{b}SnX_{(4-a-b)/2} (III),
worin R, X, R', a und b eine der oben angegebenen Bedeutungen haben, mit der Maßgabe, dass die Summe a+b kleiner oder gleich 4 ist.

10. Formkörper, hergestellt durch Vernetzung der Massen gemäß einem oder mehreren der Ansprüche 1 bis 8.

## Claims

1. Crosslinkable materials based on organosilicon compounds having at least two hydrolysable groups, **characterized in that** at least one organotin compound (C) is contained as a catalyst, the organotin compound (C) being obtainable by reacting phosphorus compounds (i) having C-P(=O)(OH) units and sulphur compounds (ii) having -SO₃H groups and tin compounds (iii) containing units of the formula
Rₐ(XR')_{b}SnX_{(4-a-b)/2} (III),
in which
R may be identical or different and are monovalent, optionally substituted hydrocarbon radicals which may be interrupted by oxygen atoms, X may be identical or different and are -0- or -S-,
R' may be identical or different and are a hydrogen atom or monovalent, optionally substituted hydrocarbon radicals which may be interrupted by oxygen atoms, or optionally substituted silyl radicals
a is 0, 1, 2 or 3 and
b is 0, 1, 2 or 3,
with the proviso that the sum a+b is less than or equal to 4.

2. Materials according to Claim 1, **characterized in that** they contain a compound (D) having basic nitrogen.

3. Materials according to Claim 2, **characterized in that** the compounds (D) having basic nitrogen are those selected from the group consisting of amines, nitrogen-containing heterocycles and amino-functional organosilicon compounds.

4. Materials according to Claim 2 or 3, **characterized in that** the compounds (D) having basic nitrogen are amino-functional organosilicon compounds.

5. Materials according to one or more of Claims 2 to 4, **characterized in that** the compounds (D) having basic nitrogen are organosilicon compounds of the formula
(R⁹O)_{4-g}SiR¹⁰ _{g} (IV)
in which
R⁹ may be identical or different and have one of the meanings mentioned above for R',
R¹⁰ may be identical or different and are monovalent, optionally substituted hydrocarbon radicals having basic nitrogen, and
g is 1, 2, 3 or 4,
and the partial hydrolysis products thereof.

6. Materials according to one or more of Claims 1 to 5, **characterized in that** the crosslinkable materials are those which contain
(A) organopolysiloxanes having at least two hydrolysable radicals selected from acetoxy, oximato and organyloxy groups, optionally
(B) crosslinking agents having at least three hydrolysable radicals selected from acetoxy, oximato and organyloxy groups, and/or the partial hydrolysis products thereof,
(C) an organotin compound obtainable by reacting phosphorus compounds (i), sulphur compounds (ii) and tin compounds (iii), as defined in Claim 1, and optionally
(D) compounds (D) having basic nitrogen.

7. Materials according to one or more of Claims 1 to 6, **characterized in that** the crosslinkable materials are those which contain
(A) diorganopolysiloxane of the formula
(R⁵O)_{3-d}R⁶ _{d}SiO-[R⁶ ₂SiO]ₑ-SiR⁶ _{d}(OR⁵)_{3-d} (V),
in which
d is 0, 1 or 2,
R⁶ are identical or different SiC-bonded hydrocarbon radicals having 1 to 18 carbon atoms, which are optionally substituted by halogen atoms, ether groups, ester groups, epoxy groups, mercapto groups, cyano groups, amino groups or (poly)glycol radicals, the latter being composed of oxyethylene and/or oxypropylene units, and
R⁵ may be identical or different and have a meaning mentioned for R',
e is an integer from 10 to 10 000, with the proviso that d may have the value 2 only when R⁵ is a hydrogen atom, optionally
(B) crosslinking agents of the formula
(R⁷O)_{4-f}SiR⁸ _{f} (VI),
in which
R⁷ may be identical or different and have one of the meanings mentioned above for R',
R⁸ has a meaning mentioned above for R and
f is 0 or 1, and/or the partial hydrolysis products thereof,
(C) organotin compound and
(D) a compound of the formula (IV) having basic nitrogen.

8. Materials according to one or more of Claims 1 to 7, **characterized in that** the crosslinkable materials are those which consist of
(A) 100 parts by weight of polydiorganosiloxane of the formula
(R⁵O)_{3-d}R⁶ _{d}SiO-[R⁶ ₂SiO]ₑ-SiR⁶ _{d}(OR⁵)_{3-d} (V),
in which
d is 0, 1 or 2,
R⁶ are identical or different SiC-bonded hydrocarbon radicals having 1 to 18 carbon atoms, which are optionally substituted by halogen atoms, ether groups, ester groups, epoxy groups, mercapto groups, cyano groups, amino groups or (poly)glycol radicals, the latter being composed of oxyethylene and/or oxypropylene units, and
R⁵ may be identical or different and have a meaning mentioned for R',
e is an integer from 10 to 10 000, with the proviso that d may have the value 2 only when R⁵ is a hydrogen atom, optionally
(B) from 0.01 to 20 parts by weight of the crosslinking agents of the formula
(R⁷O)_{4-f}SiR⁸ _{f} (VI),
in which
R⁷ may be identical or different and have one of the meanings mentioned above for R',
R⁸ has a meaning mentioned above for R and
f is 0 or 1, and/or the partial hydrolysis products thereof,
(C) from 0.05 to 3 parts by weight of organotin compound,
(D) from 0.01 to 4 parts by weight of a compound of the formula (IV) having basic nitrogen,
(E) from 0 to 300 parts by weight of plasticizers,
(F) from 0 to 300 parts by weight of fillers,
(G) from 0 to 50 parts by weight of adhesion promoters and
(H) from 0 to 100 parts by weight of additives.

9. Organotin compounds obtainable by reacting phosphorus compounds (i) having C-P(=O)(OH) units and sulphur compounds (ii) having -SO₃H groups and tin compounds (iii) containing units of the formula
Rₐ(XR')_{b}SnX_{(4-a-b)/2} (III),
in which R, X, R', a and b have the abovementioned meanings, with the proviso that the sum a+b is less than or equal to 4.

10. Moldings produced by crosslinking the materials as claimed in one or more of Claims 1 to 8.

## Revendications

1. Masses réticulables à base de composés organosiliciés comprenant au moins deux groupes hydrolysables, **caractérisées en ce qu'**au moins un composé organostannique (C) est contenu comme catalyseur, le composé organostannique (C) pouvant être obtenu par transformation de composés phosphorés (i) avec des unités C-P(=O)(OH) et de composés soufrés (ii) avec des groupes -SO₃H et des composés stanniques (iii) contenant des unités de formule
Rₐ(XR')_{b}SnX_{(4-a-b)/2} (III),
dans laquelle
R peut être identique ou différent et signifie des radicaux hydrocarbonés monovalents le cas échéant substitués, qui peuvent être interrompus par des atomes d'oxygène,
X peut être identique ou différent et signifie -O- ou -S-,
R' peut être identique ou différent et signifie un atome d'hydrogène ou des radicaux hydrocarbonés monovalents, le cas échéant substitués, qui peuvent être interrompus par des atomes d'oxygène ou des radicaux silyle le cas échéant substitués,
a vaut 0, 1, 2 ou 3 et
b vaut 0, 1, 2 ou 3,
à condition que la somme a+b soit inférieure ou égale à 4.

2. Masses selon la revendication 1, **caractérisées en ce qu'**elles contiennent un composé (D) présentant de l'azote basique.

3. Masses selon la revendication 2, **caractérisées en ce qu'**il s'agit pour les composés (D) présentant de l'azote basique de ceux choisis dans le groupe constitué par les amines, les hétérocycles contenant de l'azote ou les composés organosiliciés à fonctionnalité amino.

4. Masses selon la revendication 2 ou 3, **caractérisées en ce qu'**il s'agit pour les composés (D) présentant de l'azote basique de composés organosiliciés à fonctionnalité amino.

5. Masses selon l'une ou plusieurs des revendications 2 à 4, **caractérisées en ce qu'**il s'agit pour les composés (D) présentant de l'azote basique de composés organosiliciés de formule
(R⁹O)_{4-g}SiR¹⁰ _{g} (IV)
dans laquelle
R⁹ peut être identique ou différent et présente une des significations indiquées ci-dessus pour R',
R¹⁰ peut être identique ou différent et signifie des radicaux hydrocarbonés monovalents, présentant de l'azote basique, le cas échéant substitués, et
g vaut 1, 2, 3 ou 4,
ainsi que leurs hydrolysats partiels.

6. Masses selon l'une ou plusieurs des revendications 1 à 5, **caractérisées en ce qu'**il s'agit pour les masses réticulables de masses qui contiennent
(A) des organopolysiloxanes présentant au moins deux radicaux hydrolysables, choisis parmi les groupes acétoxy, oximato et organyloxy, le cas échéant
(B) des réticulants comprenant au moins trois radicaux hydrolysables, choisis parmi les groupes acétoxy, oximato et organyloxy et/ou leurs hydrolysats partiels,
(C) un composé organostannique pouvant être obtenu par transformation de composés phosphorés (i), de composés soufrés (ii) et de composés stanniques (iii) comme défini dans la revendication 1 et le cas échéant
(D) des composés (D) présentant de l'azote basique.

7. Masses selon l'une ou plusieurs des revendications 1 à 6, **caractérisées en ce qu'**il s'agit pour les masses réticulables de masses qui contiennent
(A) un diorganopolysiloxane de formule
(R⁵O)_{3-d}R⁶ _{d}SiO-[R⁶ ₂SiO]ₑ-SiR⁶ _{d}(OR⁵)_{3-d} (V),
où
d vaut 0, 1 ou 2,
R⁶ signifie des radicaux hydrocarbonés identiques ou différents, liés par SiC, comprenant 1 à 18 atomes de carbone, qui sont le cas échéant substitués par des atomes d'halogène, des groupes éther, des groupes ester, des groupes époxy, des groupes mercapto, des groupes cyano, des groupes amino ou des radicaux (poly)glycol, ces derniers étant constitués par des unités oxyéthylène et/ou oxypropylène et
R⁵ peut être identique ou différent et présente une signification indiquée pour R',
e vaut un nombre entier de 10 à 10000,
à condition que d ne peut valoir 2 que pour R⁵ signifiant un atome d'hydrogène, le cas échéant
(B) des réticulants de formule
(R⁷O)_{4-f}SiR⁸ _{f} (VI),
où
R⁷ peut être identique ou différent et présente une des significations indiquées ci-dessus pour R',
R⁸ présente une signification indiquée ci-dessus pour R et
f vaut 0 ou 1,
ainsi que leurs hydrolysats partiels,
(C) un composé organostannique et
(D) un composé présentant de l'azote basique dé formule (IV).

8. Masses selon l'une ou plusieurs des revendications 1 à 7, **caractérisées en ce qu'**il s'agit pour les masses réticulables de celles qui sont constituées par
(A) 100 parties en poids de polydiorganosiloxane de formule
(R⁵O)_{3-d}R⁶ _{d}SiO-[R⁶ ₂SiO]ₑ-SiR⁶ _{d}(OR⁵)_{3-d} (V),
où
d vaut 0, 1 ou 2,
R⁶ signifie des radicaux hydrocarbonés identiques ou différents, liés par SiC, comprenant 1 à 18 atomes de carbone, qui sont le cas échéant substitués par des atomes d'halogène, des groupes éther, des groupes ester, des groupes époxy, des groupes mercapto, des groupes cyano, des groupes amino ou des radicaux (poly)glycol, ces derniers étant constitués par des unités oxyéthylène et/ou oxypropylène et
R⁵ peut être identique ou différent et présente une signification indiquée pour R',
e vaut un nombre entier de 10 à 10000,
à condition que d ne peut valoir 2 que pour R⁵ signifiant un atome d'hydrogène, le cas échéant
(B) 0,01 à 20 parties en poids de réticulants de formule
(R⁷O)_{4-f}SiR⁸ _{f} (VI),
où
R⁷ peut être identique ou différent et présente une des significations indiquées ci-dessus pour R',
R⁸ présente une signification indiquée ci-dessus pour R et
f vaut 0 ou 1,
et/ou leurs hydrolysats partiels,
(C) 0,05 à 3 parties en poids de composé organostannique,
(D) 0,01 à 4 parties en poids de composé présentant de l'azote basique de formule (IV),
(E) 0 à 300 parties en poids de plastifiant,
(F) 0 à 300 parties en poids de charges,
(G) 0 à 50 parties en poids de promoteur d'adhérence et
(H) 0 à 100 parties en poids d'additifs.

9. Composés organostanniques pouvant être obtenus par transformation de composés phosphorés (i) avec des unités C-P(=0)(OH) et des composés soufrés (ii) avec des groupes -SO₃H et des composés stanniques (iii) contenant des unités de formule
Rₐ(XR')_{b}SnX_{(4-a-b)/2} (III),
dans laquelle R, X; R", a et b présentent une des significations ci-dessus, à condition que la somme a+b soit inférieure ou égale à 4.

10. Corps façonnés préparés par réticulation des masses selon l'une ou plusieurs des revendications 1 à 8.
